# DEMANDE DE BREVET EUROPEEN

(11) **EP 3 766 998 A1**
(43) Date de publication de la demande: **20.01.2021**
(21) Numéro de dépôt: 20179530.9
(22) Date de dépôt: 11.06.2020
(51) Int. Cl.: C22C 1/04, C22C 1/05, B22F 1/00, C22C 5/00, C22C 5/02

(54) **PROCEDE DE FABRICATION D ALLIAGES DE METAUX PRECIEUX ET ALLIAGES DE METAUX PRECIEUX AINSI OBTENUS**

(30) Priorité: 18.07.2019 EP 19187108
(71) Demandeur: The Swatch Group Research and Development Ltd, 2074 Marin (CH)
(72) Inventeur: MIKO, Mme Csilla, 1417 Essertines-sur-Yverdon (CH); GROSJEAN, Rémi, 2503 Bienne (CH); BAZIN, M. Jean-Luc, 2512 Tüscherz-Alfermée (CH)
(74) Mandataire: ICB SA

(57) **Abrégé**

La présente invention concerne un procédé de fabrication d'un alliage formé d'un borure d'un métal précieux, le procédé consistant à faire réagir une source dudit métal précieux avec une source de bore dans un sel ou un mélange de sels à l'état fondu. La présente invention concerne également un alliage formé d'un borure d'un métal précieux, ledit alliage comprenant des nanoparticules cristallines de MₓB_{y} avec M qui est un métal précieux, réparties dans une matrice amorphe de B ou dans une matrice amorphe de B et de M_{z}Bₐ.

## Description

### Domaine technique de l'invention

La présente invention concerne un procédé de fabrication d'alliages de métaux précieux. La présente invention concerne également de tels alliages de métaux précieux et les pièces réalisées avec ces alliages. En particulier, la présente invention concerne un procédé de fabrication d'alliages légers de métaux précieux obtenus à partir d'or, d'argent, de platine, de palladium, de ruthénium ou d'iridium. Les alliages légers de métaux précieux dont il est question ici sont titrables, c'est-à-dire qu'il s'agit d'alliages dont le rapport entre la masse du métal précieux qui entre dans la composition de l'alliage et la masse totale de cet alliage est déterminé par la loi.

### Arrière-plan technologique de l'invention

Au sens de la présente invention et dans tout ce qui suit, on entend par métal précieux un métal choisi dans le groupe constitué par l'or, l'argent, le platine, le palladium, le ruthénium et l'iridium.

Les métaux précieux tels que l'or sont utilisés dans de nombreux domaines comme la bijouterie et l'horlogerie. L'or a comme inconvénient d'être facilement déformable avec pour corollaire qu'un simple impact suffit à déformer le bijou réalisé à l'aide de ce métal précieux. C'est pourquoi on a cherché très tôt à améliorer les propriétés mécaniques de l'or en l'alliant avec d'autres éléments métalliques. A cet égard, l'argent et le cuivre sont les deux principaux métaux utilisés pour améliorer la rigidité de l'or. L'alliage de l'or avec d'autres éléments métalliques tels que l'argent ou le cuivre conduit à des alliages métalliques dont la dureté est supérieure à celle de l'or. Néanmoins, ces alliages d'or ont comme inconvénient de présenter une masse volumique élevée. C'est pourquoi il a été tenté d'allier l'or avec des éléments métalliques de masse volumique plus faible.

Des essais ont été effectués pour tenter d'allier l'or (Au) qui est un métal lourd, c'est-à-dire un métal dont la masse volumique est élevée (environ 19.3 g.cm⁻³), avec le bore (B) qui est un métal très léger, c'est-à-dire dont la masse volumique est faible (environ 2.3 g.cm⁻³). Néanmoins, les tentatives effectuées jusqu'à aujourd'hui pour tenter d'allier l'or et le bore se sont soldées par des échecs ou, au mieux, ont abouti à des taux de dissolution du bore très faibles, ne permettant pas d'envisager une production industrielle. Les matériaux résultant de la combinaison de l'or et du bore se sont en effet révélés instables et il s'est avéré impossible de réaliser des composants massifs titrables tels que de l'or 18 carats à l'aide de cette combinaison. Ces problèmes s'expliquent notamment par le fait qu'au cours d'un procédé classique d'alliage par fusion des éléments, on ne parvient pas à mélanger l'or et le bore. En effet, en raison de sa masse volumique élevée, l'or a tendance à sédimenter au fond du creuset, tandis que le bore dont la masse volumique est plus faible, surnage.

Ainsi, de nombreux documents tels que le chapitre 10 du Handbook of Solid State Chemistry, First Edition, Edited by Richard Dronskowski, Shinichi Kikkawa, and Andreas Stein, publié en 2017 relèvent l'impossibilité de réaliser des borures de métaux précieux riches en bore, à savoir des borures métalliques MₓB_{y} où M est un métal avec un rapport y sur x supérieur ou égal à 1.

A titre d'exemple, dans le cas du palladium, on a pu obtenir des borures métalliques dont la teneur en bore n'excédait pas Pd₆B à Pd₂B. On est parvenu à obtenir PtB_{0.7} pour le platine, ce qui se situe à la limite basse des borures métalliques riches en bore. Pour un or 18 carat, c'est-à-dire renfermant 75% en masse d'or, il est nécessaire d'avoir une composition proche ou égale à AuB_{5.7}, ce qui, à la connaissance de la Demanderesse, n'a pas été réalisé pour l'instant.

### Résumé de l'invention

La présente invention a pour but de fournir un procédé de fabrication d'alliages légers de métaux précieux permettant notamment d'obtenir des alliages légers de métaux précieux stables d'un point de vue physicochimique et à l'aide desquels il est possible de réaliser des composants massifs. Plus précisément, le procédé selon l'invention consiste à réaliser un alliage d'un métal précieux et de bore par réaction d'une source dudit métal précieux avec une source de bore dans un mélange de sels fondus agissant comme solvant. De préférence, la source de bore est un borohydrure de sodium et la source de métal précieux est un chlorure dudit métal précieux. L'alliage issu de ce procédé est formé de nanoparticules de borure de métal précieux MₓB_{y} où M est le métal précieux réparties dans une matrice de bore B. Préférentiellement, le rapport y/x des nanoparticules de borure de métal précieux MₓB_{y} est supérieur ou égal à 1 et, plus préférentiellement, supérieur ou égal à 2. Le procédé selon l'invention permet ainsi de réaliser des alliages de métaux précieux riches en bore.

Selon une forme d'exécution de l'invention, l'alliage de métal précieux et de bore est directement utilisé pour fabriquer une pièce par métallurgie des poudres.

Selon une autre forme d'exécution de l'invention, l'alliage de métal précieux et de bore issu du procédé par synthèse en sels fondus selon l'invention est enrichi en métal précieux avant de fabriquer la pièce par métallurgie des poudres.

La présente invention concerne ainsi l'alliage de métal précieux et de bore directement issu du procédé de fabrication par synthèse en sels fondus ainsi que l'alliage enrichi en métal précieux. Elle concerne également les pièces, en particulier les pièces d'horlogerie ou de bijouterie, réalisées avec l'alliage de métal précieux et de bore directement issu du procédé de fabrication par réaction en sels fondus ou avec ce même alliage enrichi en métal précieux. En effet, il est possible que le rapport y/x soit trop élevé pour réaliser, par exemple, un or 18 carats. Dans ce cas, la matrice de bore est enrichie avec le métal précieux.

Le procédé selon l'invention permet d'obtenir des alliages de métal précieux et de bore qui présentent à la fois d'excellentes propriétés mécaniques et une faible masse volumique. A la connaissance de la Demanderesse, le procédé selon l'invention offre, pour la première fois, la possibilité d'allier, à une échelle industrielle, un composant de masse volumique très faible, en l'occurrence le bore, avec un métal précieux, notamment mais non exclusivement l'or, dont la masse volumique est élevée. De façon remarquable, dans le procédé selon l'invention, le métal précieux sélectionné et le bore s'allient intimement, sans qu'à aucun moment un phénomène de ségrégation entre les deux matériaux ne puisse être observé.

### Description détaillée d'un mode de mise en œuvre de l'invention

La présente invention concerne un procédé de fabrication d'un borure d'un métal précieux, aussi appelé ci-après alliage de métal précieux et de bore, et un procédé de fabrication d'une pièce réalisée dans cet alliage. L'alliage est fabriqué par synthèse dans des sels fondus, synthèse également connue sous sa dénomination anglo-saxonne Synthesis in Molten Salts ou SMS. Cette synthèse consiste à mettre en présence des substances réactives du métal précieux et du bore dans un milieu comprenant des sels. Lorsque l'on chauffe l'ensemble, les sels fondent, agissant par conséquent à la façon d'un milieu liquide. La synthèse de l'alliage de métal précieux et de bore dans des sels fondus fait appel à une source de métal et à une source de bore. La source de métal peut être choisie parmi le groupe comprenant les sulfates, les carbonates, les acétates, les nitrates, les acétylacétonates et les halogénures du métal précieux. Préférentiellement, la source de métal précieux est un halogénure et, plus précisément encore, un chlorure du métal précieux (MCIₓ). Le métal précieux est choisi parmi l'or (Au), l'argent (Ag), le platine (Pt), le palladium (Pd), le ruthénium (Rh) et l'iridium (Ir) et, plus préférentiellement, parmi l'or, l'argent, le platine et l'iridium. La source de bore peut être choisie parmi le groupe comprenant les boranes (BₓH_{y}) et les borohydrures (MBH₄). Préférentiellement, la source de bore est du borohydrure de sodium (NaBH₄). Ainsi, la réaction est préférentiellement réalisée en présence d'un chlorure du métal précieux, tel que AuCl₃ pour l'or (Au), et de borohydrure de sodium (NaBH₄). Concernant les sels agissant comme milieu de réaction, ils sont préférentiellement solubles dans l'eau pour permettre la récupération du borure après la réaction. A titre d'exemple, il peut s'agir d'un mélange d'un ou plusieurs sels de métaux alcalins et plus précisément d'halogénures, de carbonates, de sulfates ou encore de nitrates. Préférentiellement, il s'agit d'un mélange eutectique de chlorure de lithium et de chlorure de potassium dans un rapport 45-50% en poids de LiCl et 55-50% en poids de KCl qui a un point de fusion aux alentours de 355°C. Le sel est préférentiellement présent dans une quantité molaire supérieure à celle de la quantité molaire totale du bore dans la source de bore et du métal dans la source de métal précieux.

Le sel est typiquement solide à température ambiante et est mis en fusion à une température comprise entre 100 et 1000°C, de préférence entre 355 et 900°C pendant la réaction. Idéalement, on se place au-dessus de la température de fusion du mélange de sels, mais en-dessous de la température de vaporisation de ce mélange. A titre d'exemple, le mélange Lil/KI se vaporise partiellement au-delà de 850°C.

En outre, le milieu réactif peut optionnellement comporter un ou plusieurs additifs ayant pour fonction de contrôler la taille des particules et/ou la morphologie du borure obtenu. Il peut, à titre d'exemple, s'agir d'un iodure tel qu'un iodure de potassium ou de sodium. La quantité d'additif est préférentiellement comprise entre 1 et 100 moles par mole de métal de la source de métal précieux.

Le procédé peut être réalisé à pression ambiante ou à une pression supérieure à la pression ambiante. L'atmosphère peut être contrôlée. Ainsi, l'utilisation de sels de lithium et de potassium nécessite de devoir travailler sous atmosphère inerte, en raison de la sensibilité de ces produits chimiques à l'eau et/ou à l'oxygène. Par conséquent, les précurseurs sont manipulés et mélangés sous atmosphère inerte d'argon. La synthèse proprement dite est menée sous atmosphère d'argon et non d'azote, étant donné que l'azote est susceptible de réagir avec certaines espèces de bore et de conduire à la formation de nitrure de bore.

Le procédé est réalisé en mélangeant la source de métal précieux, la source de bore et le ou les sels. Le tout est chauffé à la température désirée pour fondre le sel ou le mélange de sels et maintenu à cette température pendant un temps préférentiellement compris entre 30 minutes et 10 heures. Après la réaction, on laisse le milieu réactif refroidir de préférence naturellement. On obtient des borures de métal sous la forme d'agrégats dispersés dans un volume de sels figés. Pour éliminer les sels, on effectue des cycles de lavage/centrifugation dans un solvant polaire tel que de l'eau ou du méthanol.

L'alliage issu de ce procédé de fabrication en sels fondus se présente sous forme d'une poudre formée d'agrégats de nanoparticules cristallines de borure métallique MₓB_{y} dispersées dans une matrice de bore B amorphe. On entend par particules nanométriques des particules dont la taille est comprise entre 5 et 200 nm, de préférence entre 10 et 100 nm. Les agrégats ont typiquement une taille comprise entre 0.3 et 1 micromètre. Préférentiellement, le rapport stœchiométrique y/x du borure métallique MₓB_{y} qui compose les nanoparticules cristallines est supérieur ou égal à 1 et, plus préférentiellement, supérieur ou égal à 2. Ainsi, pour un alliage d'or 18 carats, les nanoparticules doivent répondre à la composition AuB_{y} avec y proche de 6.

Selon une première forme d'exécution de l'invention, l'alliage issu du procédé de fabrication par synthèse en sels fondus est directement utilisé pour fabriquer une pièce par métallurgie des poudres. La poudre formée des agrégats est utilisée comme telle ou est préalablement broyée pour obtenir une poudre avec un d50 inférieur à 70 µm. Autrement dit, 50% des particules formant la poudre ont un diamètre inférieur ou égal à 70 µm.

Selon une seconde forme d'exécution de l'invention, l'alliage est enrichi en métal précieux avant la fabrication de la pièce par métallurgie des poudres. Cet enrichissement est réalisé via les étapes additionnelles consistant à :
- se munir d'une quantité de la poudre de l'alliage précité, la poudre pouvant être directement issue du procédé de synthèse en sels fondus ou être broyée pour atteindre le d50 inférieur à 70 µm ;
- se munir d'une quantité de poudre de métal précieux. Il peut s'agir du même métal précieux que celui de l'alliage obtenu par synthèse en sels fondus. Il est également envisageable d'enrichir l'alliage avec un autre métal précieux ou encore avec un mélange de métaux précieux. Cette poudre présente un d50 inférieur à 70 µm ;
- mélanger ces deux quantités de poudres et fritter le mélange résultant comme décrit ci-après afin d'obtenir, après frittage, un alliage comprenant des nanoparticules cristallines de borure métallique MₓB_{y} avec M qui est le métal précieux, réparties dans une matrice formée de bore B amorphe et de borure métallique M_{z}Bₐ, avec z et a qui peuvent être égaux ou inférieurs à respectivement x et y. On notera que la stœchiométrie des particules de borure métallique dispersées dans la matrice de bore n'est habituellement pas la même que celle des particules de borure métallique qui forment la matrice avec le bore. Les particules de borure métallique qui forment la matrice avec le bore ont souvent une fraction molaire z du métal égale, voire légèrement supérieure, à la fraction molaire a du bore.

On précisera que des éléments autres que des métaux précieux comme, par exemple, du nickel, peuvent être ajoutés au mélange durant cette étape.

Le procédé de fabrication de la pièce, que ce soit avec l'alliage selon la première variante ou avec l'alliage selon la seconde variante, comporte ensuite les étapes suivantes :
- compacter la poudre par application d'une pression uni-axiale ;
- soumettre ladite poudre compactée à un traitement de frittage par plasma à étincelles (Spark Plasma Sintering ou flash sintering) sous une pression comprise entre 0,5 GPa et 10 GPa, ou bien à un traitement de compression isostatique à chaud (Hot Isostatic Pressing ou HIP) sous une pression comprise entre 80 bars et 2200 bars, le traitement étant effectué à une température comprise entre 400°C et 2100 °C afin d'obtenir au moins un lingot d'un alliage de métal précieux et de bore ;
- usiner le lingot d'alliage de métal précieux et de bore afin d'obtenir la pièce recherchée, ou bien
- réduire le lingot d'alliage de métal précieux et de bore à l'état de poudre par un traitement de micronisation, et obtenir la pièce recherchée par traitement de la poudre résultant du traitement de micronisation.

Une fois que l'on a micronisé le lingot d'alliage de métal précieux et de bore, une première possibilité pour obtenir la pièce massive recherchée consiste à introduire la poudre résultant du traitement de micronisation dans un moule et à soumettre ce moule à une pression uni-axiale ou isostatique.

Une fois que l'on a micronisé le lingot d'alliage de métal précieux et de bore, une deuxième possibilité pour obtenir la pièce massive recherchée consiste à soumettre la poudre résultant du traitement de micronisation à un traitement de fabrication additive tridimensionnelle.

Le traitement de fabrication additive tridimensionnelle peut être du type à impression directe. Les techniques de fabrication additives tridimensionnelles du type direct disponibles sont le frittage laser, encore connu sous sa dénomination anglo-saxonne Selective Laser Melting ou SLM et le frittage par bombardement d'électrons également connu sous sa dénomination anglo-saxonne E-beam melting.

Le traitement de fabrication additive tridimensionnelle peut être du type à impression indirecte. Les techniques de fabrication additives tridimensionnelles du type indirect disponibles sont :
- impression par jet d'encre (Inkjetting) : la poudre résultant du traitement de micronisation du lingot d'alliage de métal précieux et de bore est dispersée dans l'encre. L'encre est imprimée couche après couche, chaque couche étant durcie par exposition au rayonnement d'une source de lumière par exemple UV avant dépôt de la couche suivante.
- nanoparticule jetting (NPJ) : cette technique, notamment développée par la société XJet, est semblable à l'impression par jet d'encre liquide, à la différence près que l'encre est composée de nanoparticules en suspension résultant du traitement de micronisation. La suspension est ensuite projetée, puis séchée couche par couche.
- Digital Light Projecting (DLP) : cette technique consiste à projeter par réflexion sur un miroir l'image de la pièce que l'on souhaite structurer sur un lit de poudre contenant les particules de poudre résultant du traitement de micronisation dispersées dans un photopolymère.

Une fois que l'on a micronisé le lingot d'alliage de métal précieux et de bore, une troisième possibilité pour obtenir la pièce massive recherchée consiste à soumettre la poudre résultant du traitement de micronisation du lingot à un traitement de fabrication additive tridimensionnelle, d'injection ou de micro-injection en présence d'un liant polymérique. Ainsi, la poudre résultant du traitement de micronisation du lingot d'alliage de métal précieux et de bore est mélangée avec le liant polymérique afin d'obtenir une charge d'alimentation (feedstock). On réalise ensuite une pièce verte (green body) dont la forme correspond au profil de la pièce recherchée en soumettant la charge d'alimentation soit à une injection ou à une micro-injection, soit à une technique de fabrication additive.

Parmi les techniques disponibles de fabrication additive indirectes en présence d'un liant polymérique, on peut citer :
- Solvent on Granulate jetting : cette technique consiste à projeter un solvant sur un lit de granulats formé par la charge d'alimentation ou feedstock. Les dimensions de ces granulats sont de l'ordre de 10 µm à 50 µm. La pièce recherchée est imprimée couche par couche, les granulats s'agglomérant grâce au liant.
- FFD (Fused Filament Déposition) : des filaments dont les dimensions sont dans le domaine du millimètre sont réalisés en agglomérant la charge d'alimentation ou feedstock. Ces filaments sont ensuite chauffés et la matière dont ils sont faits s'échappent d'une buse dont le diamètre est de l'ordre de 40 µm et permettent d'imprimer la pièce recherchée en trois dimensions.
- micro-extrusion.

En variante, le mélange entre le liant et la poudre peut être directement réalisé lors de la fabrication additive en utilisant la technique de binder jetting qui consiste à projeter un jet d'encre contenant un solvant et un liant sur un lit de poudre formé par les particules de poudre résultant du traitement de micronisation.

Quant au liant, il est choisi dans le groupe formé par le polyéthylène glycol (PEG), le cellulose acétate butyrate (CAB), le nano-cellulose (dérivé nanométrique du cellulose), l'amidon de maïs, le sucre, l'acide polylactique (Polylactic Acid ou PLA), le polyéthylène, le polypropylène, la cire synthétique ou naturelle et l'acide stéarique.

Une pièce brune (brown body) est obtenue en soumettant la pièce verte à une étape d'élimination du liant polymérique appelée étape de déliantage au cours de laquelle la pièce verte est traitée chimiquement, puis thermiquement dans un four pour brûler le liant polymérique résiduel, cette étape de déliantage s'effectuant typiquement en phase gazeuse dans une atmosphère d'acide nitrique ou d'acide oxalique et à une température comprise entre 100°C et 140°C.

Finalement, la pièce brune est soumise à un traitement de frittage sous atmosphère protégée et à une température comprise entre 700°C et 1800°C afin d'obtenir la pièce recherchée.

On notera qu'il est possible, après le traitement de frittage, de soumettre la pièce issue de l'étape de frittage à une étape de post-traitement par compression isostatique à chaud (Hot Isostatic Pressing ou HIP) sous une pression comprise entre 500 bars et 2200 bars, et à une température comprise entre 600°C et 2100°C.

La pièce ainsi fabriquée est réalisée dans un alliage en borure de métal précieux. Cet alliage est, selon la première variante, formé de nanoparticules cristallines de MₓB_{y} où M est le métal précieux réparties dans une matrice amorphe de bore B. Selon la seconde variante, l'alliage enrichi en métal précieux comporte les nanoparticules cristallines de MₓB_{y} réparties dans une matrice amorphe de bore B et de borure de métal précieux M_{z}Bₐ. Le métal précieux M est choisi parmi l'or (Au), l'argent (Ag), le platine (Pt), le palladium (Pd), le ruthénium (Rh) et l'iridium (Ir). Préférentiellement, il est choisi parmi l'or, l'argent, le platine et l'iridium et plus préférentiellement il s'agit d'or. De préférence, le rapport y/x des nanoparticules MₓB_{y} est supérieur ou égal à 1, plus préférentiellement, il est supérieur ou égal à 2. Quant au rapport a/z, il est typiquement inférieur ou égal à 1.

Les alliages légers de métaux précieux dont il est question ici sont titrables, c'est-à-dire qu'il s'agit d'alliages dont le rapport entre la masse du métal précieux qui entre dans la composition de l'alliage et la masse totale de cet alliage est déterminé par la loi. Un alliage de métal précieux remarquable obtenu grâce au procédé de l'invention est un alliage d'or et de bore 18 carats de composition AuB₆ avec une masse volumique comprise entre 6.6 et 7 g/cm³. On notera également que la poudre d'or utilisée dans le cadre de la présente invention est préférentiellement une poudre d'or ½ jaune vif 24 carats.

La pièce peut, en particulier, être une pièce d'horlogerie ou de bijouterie et, plus précisément, une pièce d'habillage telle qu'une carrure, un fond, une lunette, un poussoir, un maillon de bracelet, un cadran, une aiguille, un index de cadran, etc.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées.

## Revendications

1. Procédé de fabrication d'une poudre d'alliage d'un métal précieux et de bore pour obtenir un borure de métal précieux, le métal précieux étant choisi dans le groupe formé par l'or, l'argent, le platine, le palladium, le ruthénium et l'iridium, le procédé consistant à faire réagir une source dudit métal précieux avec une source de bore dans un ou plusieurs sels à l'état fondu et comprenant à cet effet les étapes suivantes :
- mélanger la source de bore, la source de métal précieux et le ou les sels à l'état solide ;
- chauffer le mélange à une température comprise entre 100 et 1000°C et, de préférence, entre 355 et 900°C, pour faire réagir la source de bore et la source de métal précieux afin d'obtenir le borure métallique du métal précieux ;
- refroidir le mélange ;
- séparer le ou les sels solidifiés du borure de métal précieux, ledit borure de métal précieux se présentant sous forme d'une poudre comportant des agrégats formés de nanoparticules cristallines de borure de métal précieux MₓB_{y} réparties dans une matrice de B amorphe, le rapport y/x des nanoparticules cristallines de borure de métal précieux MₓB_{y} étant supérieur ou égal à 1 et, plus préférentiellement, supérieur ou égal à 2.

2. Procédé de fabrication d'une poudre d'alliage selon la revendication 1, **caractérisé en ce que** la source dudit métal précieux est choisie parmi le groupe formé par les sulfates, les carbonates, les acétates, les nitrates, les acétylacétonates et les halogénures du métal précieux.

3. Procédé de fabrication d'une poudre d'alliage selon la revendication 2, **caractérisé en ce que** la source dudit métal précieux est un chlorure du métal précieux MClₓoù M est le métal précieux.

4. Procédé de fabrication d'une poudre d'alliage selon l'une des revendications précédentes, **caractérisé en ce que** la source de bore est choisie parmi le groupe formé par les boranes et les borohydrures.

5. Procédé de fabrication d'un poudre d'alliage selon la revendication 4, **caractérisé en ce que** la source de bore est du borohydrure de sodium NaBH₄.

6. Procédé de fabrication d'une poudre d'alliage selon l'une des revendications précédentes, **caractérisé en ce qu'**il comporte les étapes additionnelles suivantes pour modifier la composition du borure de métal précieux:
- se munir d'au moins une quantité de poudre dudit métal précieux et/ou d'une poudre d'un autre métal précieux;
- se munir d'une quantité de poudre dudit borure de métal précieux;
- mélanger la poudre dudit métal précieux et/ou dudit autre métal précieux avec la poudre dudit borure de métal précieux pour obtenir un mélange dudit borure de métal précieux avec ledit métal précieux et/ou avec ledit autre métal précieux.

7. Procédé de fabrication d'une poudre d'alliage selon la revendication 6, **caractérisé en ce que** la poudre dudit métal précieux et/ou dudit autre métal précieux a un d50 inférieur à 70 µm , et **en ce que** la poudre du borure de métal précieux a un d50 inférieur à 70 µm.

8. Procédé de fabrication d'une pièce à l'aide d'un borure de métal précieux obtenu au moyen du procédé de fabrication d'une poudre d'alliage selon l'une quelconque des revendications précédentes, **caractérisé en ce qu'**il comprend les étapes suivantes :
- mise à disposition de la poudre de borure de métal précieux ;
- compactage du mélange de la poudre de borure de métal précieux et de la poudre de métal précieux par application d'une pression uni-axiale ;
- soumission de la poudre compactée à un traitement de frittage par plasma à étincelles encore appelé Spark Plasma Sintering ou flash sintering sous une pression comprise entre 0,5 GPa et 10 GPa, ou bien à un traitement de compression isostatique à chaud encore appelé Hot Isostatic Pressing ou HIP sous une pression comprise entre 80 bars et 2200 bars, le traitement étant effectué à une température comprise entre 400°C et 2100°C afin d'obtenir au moins un lingot d'un alliage du borure du métal précieux, et
- usinage dudit lingot afin d'obtenir la pièce recherchée, ou bien
- réduction à l'état de poudre dudit lingot par un traitement de micronisation, et obtention de la pièce recherchée par traitement de la poudre résultant du traitement de micronisation.

9. Procédé de fabrication d'une pièce selon la revendication 8, **caractérisé en ce que**, afin d'obtenir la pièce recherchée, la poudre résultant du traitement de micronisation est introduite dans un moule et soumise à une pression uni-axiale ou isostatique.

10. Procédé de fabrication d'une pièce selon la revendication 8, **caractérisé en ce que**, afin de réaliser la pièce recherchée, on soumet la poudre résultant du traitement de micronisation à un traitement de fabrication additive tridimensionnelle.

11. Procédé de fabrication d'une pièce selon la revendication 10, **caractérisé en ce que** le traitement de fabrication additive tridimensionnelle est du type impression directe choisi dans le groupe formé par le frittage laser dit Selective Laser Melting ou en abrégé SLM et le frittage par bombardement d'électrons dit E-beam melting.

12. Procédé de fabrication d'une pièce selon la revendication 10, **caractérisé en ce que** le traitement de fabrication additive tridimensionnelle est du type impression indirecte choisi dans le groupe formé par Inkjetting, nanoparticule jetting et Digital Light Projecting.

13. Procédé de fabrication d'une pièce selon la revendication 8, **caractérisé en ce que**, afin de réaliser la pièce recherchée, on soumet la poudre résultant du traitement de micronisation à un traitement de fabrication additive tridimensionnelle, d'injection ou de micro-injection en présence d'un liant polymérique.

14. Procédé de fabrication d'une pièce selon la revendication 13, **caractérisé en ce qu'**il comprend les étapes de :
- mélange de la poudre résultant du traitement de micronisation du lingot avec le liant polymérique afin d'obtenir une charge d'alimentation dite feedstock ;
- réalisation d'une pièce verte, dite green body, dont la forme correspond au profil de la pièce recherchée, en soumettant la charge d'alimentation à une injection ou micro-injection ;
- obtention d'une pièce brune, dite brown body, en soumettant la pièce verte à une étape d'élimination du liant polymérique appelée étape de déliantage au cours de laquelle la pièce verte est traitée chimiquement, puis thermiquement dans un four pour brûler le liant polymérique résiduel, cette étape de déliantage s'effectuant en phase gazeuse dans une atmosphère d'acide nitrique ou d'acide oxalique et à une température comprise entre 100°C et 140°C ;
- soumission de la pièce brune à un traitement de frittage sous atmosphère protégée et à une température comprise entre 700°C et 1800°C afin d'obtenir la pièce recherchée.

15. Procédé de fabrication d'une pièce selon la revendication 13, **caractérisé en ce qu'**il comprend les étapes de :
- réalisation d'une pièce verte, dite green body, dont la forme correspond au profil de la pièce recherchée en soumettant la poudre résultant du traitement de micronisation du lingot au traitement de fabrication additive tridimensionnelle ;
- obtention d'une pièce brune, dite brown body, en soumettant la pièce verte à une étape d'élimination du liant polymérique appelée étape de déliantage au cours de laquelle la pièce verte est traitée chimiquement puis thermiquement dans un four pour brûler le liant polymérique résiduel, cette étape de déliantage s'effectuant en phase gazeuse dans une atmosphère d'acide nitrique ou d'acide oxalique et à une température comprise entre 100°C et 140°C ;
- soumission de la pièce brune à un traitement de frittage sous atmosphère protégée et à une température comprise entre 700°C et 1800°C afin d'obtenir la pièce recherchée.

16. Procédé de fabrication d'une pièce selon la revendication 15, **caractérisé en ce que** la technique de fabrication additive est choisie dans le groupe formé par le Solvent on Granulate jetting, le Fused Filament Déposition et la micro-extrusion.

17. Procédé de fabrication d'une pièce selon la revendication 15, **caractérisé en ce que** la technique de fabrication additive est le Binder jetting.

18. Procédé de fabrication d'une pièce selon l'une des revendications 14 à 17, **caractérisé en ce que**, après le traitement de frittage, on soumet la pièce issue de l'étape de frittage à une étape de post-traitement par compression isostatique à chaud dite Hot Isostatic Pressing ou en abrégé HIP, sous une pression comprise entre 500 bars et 2200 bars, et à une température comprise entre 600°C et 2100°C.

19. Procédé de fabrication d'une pièce selon l'une des revendications 13 à 18, **caractérisé en ce que** le liant est choisi dans le groupe formé par le polyéthylène glycol, le cellulose acétate butyrate, le nano-cellulose, l'amidon de maïs, le sucre, l'acide polylactique, le polyéthylène, le polypropylène, la cire synthétique ou naturelle et l'acide stéarique.

20. Alliage formé d'un borure d'un métal précieux choisi dans le groupe comprenant l'or Au, l'argent Ag, le platine Pt, le palladium Pd, le ruthénium Rh et l'iridium (Ir, ledit alliage comprenant des nanoparticules cristallines de MₓB_{y} avec M qui est le métal précieux, le rapport y/x des nanoparticules cristallines de borure de métal précieux MₓB_{y} étant supérieur ou égal à 1 et, plus préférentiellement, supérieur ou égal à 2, les nanoparticules cristallines de MₓB_{y} étant réparties dans une matrice amorphe de bore B ou dans une matrice amorphe de B et de borure de métal précieux M_{z}Bₐ avec z et a qui peuvent être égaux ou inférieurs à respectivement x et y.

21. Alliage selon la revendication précédente, **caractérisé en ce que** le rapport y/x des nanoparticules cristallines de MₓB_{y} est supérieur ou égal à 1, de préférence supérieur ou égal à 2.

22. Alliage selon l'une des revendications 20 ou 21, **caractérisé en ce que** le métal précieux est de l'or et **en ce qu'**il s'agit d'or 18 carats avec une composition MₓB_{y} où x est égal à 1 et y est proche de 6.

23. Alliage selon l'une des revendications 20 à 22, **caractérisé en ce qu'**il contient d'autres éléments alliés.

24. Pièce pour l'horlogerie ou pièce pour la bijouterie réalisée dans l'alliage selon l'une des revendications 20 à 23.
